# FASCICULE DE BREVET EUROPEEN

(11) **EP 0 421 832 B1**
(45) Date de publication et mention de la délivrance du brevet: **11.05.1994**
(21) Numéro de dépôt: 90402415.5
(22) Date de dépôt: 31.08.1990
(51) Int. Cl.: B60G 17/005

(54) **Suspension hydropneumatique de véhicule automobile**
Hydropneumatische Aufhängung eines Kraftfahrzeugs
Hydropneumatic suspension of an automotive vehicle

(30) Priorité: 12.09.1989 FR 8912202
(43) Date de publication de la demande: 10.04.1991
(73) Titulaire: AUTOMOBILES PEUGEOT, 75116 Paris (FR); AUTOMOBILES CITROEN, 92200 Neuilly-sur-Seine (FR)
(72) Inventeur: Richard, Denis, F-94600 Choisy-le-Roi (FR)
(74) Mandataire: Fabien, Henri

(56) Documents cités:
- EP-A- 0 213 020
- DE-A- 2 831 697
- DE-U- 8 804 229
- FR-A- 2 479 358
- GB-A- 651 383

## Description

La présente invention concerne une suspension hydropneumatique de véhicule automobile comportant un accumulateur principal alimenté par une pression régulée par une pompe à haute pression, un vérin de suspension coopérant avec un accumulateur hydropneumatique pour chacune des roues du véhicule, un correcteur de hauteur pour chacun des essieux et propre à relier selon la charge de l'essieu les vérins de suspension correspondants soit à l'accumulateur principal, soit à l'échappement.

Mais les circuits de suspension comportent des fuites de sorte qu'après l'arrêt du moteur, la pression baisse dans les vérins de suspension et la caisse du véhicule s'affaisse; cette caisse vient reposer sur ses butées et il se peut que les pare-chocs viennent reposer sur les trottoirs ou sur les pare-chocs des véhicules adjacents.

Pour remédier à cet inconvénient, il est connu par le brevet français FR-A-2 585 296 (EP-A-0 213 020) de munir chaque essieu d'un clapet anti-affaissement interposé entre les vérins de suspension de cet essieu et le correcteur de hauteur correspondant, ainsi que de moyens sensibles à la pression de l'accumulateur principal et coopérant avec un ressort antagoniste pour ouvrir et fermer ce clapet.

Mais si dans une suspension à clapet anti-affaissement de ce genre, le moteur du véhicule est arrêté alors que le véhicule est en position haute, la pression dans les vérins de suspension et dans les accumulateurs de suspension est égale à la pression maximale de l'accumulateur principal; il n'est plus possible de revenir à la position de hauteur moyenne qui est la position normale de roulage.

La suspension selon l'invention remédie à cet inconvénient grâce aux caractéristiques mentionnées dans la partie caractérisante de la revendication 1.

On a décrit ci-après, à titre d'exemple non limitatif, un mode de réalisation de la suspension selon l'invention, avec référence aux dessins annexés dans lesquels :
La Figure 1 est un schéma de la suspension;
La Figure 2 est une vue en coupe d'un clapet anti-affaissement;
La Figure 3 est une vue en coupe, à plus grande échelle, d'un détail de ce clapet;
La Figure 4 est une vue semblable à la Figure 3 d'une variante.

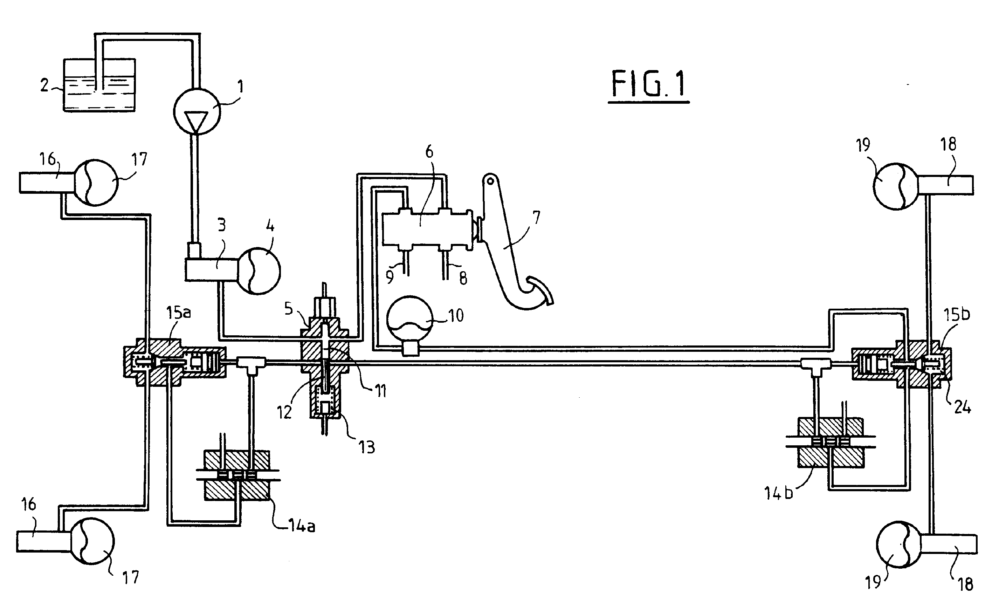

A la Figure 1, on voit une suspension hydropneumatique de véhicule comprenant une pompe 1 dont l'admission est reliée à un réservoir 2 alors que son refoulement est relié à un conjoncteur-disjoncteur 3 propre à maintenir constante la pression dans un accumulateur 4 qui assure l'alimentation des différentes fonctions hydrauliques du véhicule.

L'accumulateur 4 est relié par l'intermédiaire d'une vanne de sécurité 5 à un doseur 6 qui est commandé par la pédale de freinage 7 et délivre la pression dans le circuit de freinage avant 8 en fonction de l'effort exercé sur la pédale; le doseur détermine également la pression dans le circuit de freinage arrière 9 en provenance d'un accumulateur supplémentaire 10.

La vanne de sécurité 5 comporte un alésage 11 dans lequel débouchent des canalisations reliées à l'accumulateur 4 et au doseur 6. Dans cet alésage, est disposé un tiroir 12 qui est soumis d'une part à l'action de la pression de l'accumulateur principal 4 et d'autre part à celle d'un ressort antagoniste 13; ce tiroir est mobile devant des orifices des canalisations reliées au correcteur de hauteur avant 14a et arrière 14b ainsi qu'à des clapets anti-affaissement avant 15a et arrière 15b. Le clapet anti-affaissement avant 15a est interposé entre le correcteur de hauteur avant 14a et les cylindres de suspension avant 16 qui sont associés aux accumulateurs de suspension avant 17. De son côté le clapet d'anti-affaissement arrière 15b est interposé entre d'une part l'accumulateur auxiliaire et le correcteur de hauteur 14b et d'autre part aux cylindres de suspension arrière 18 qui sont associés aux accumulateurs de suspension arrière 19.

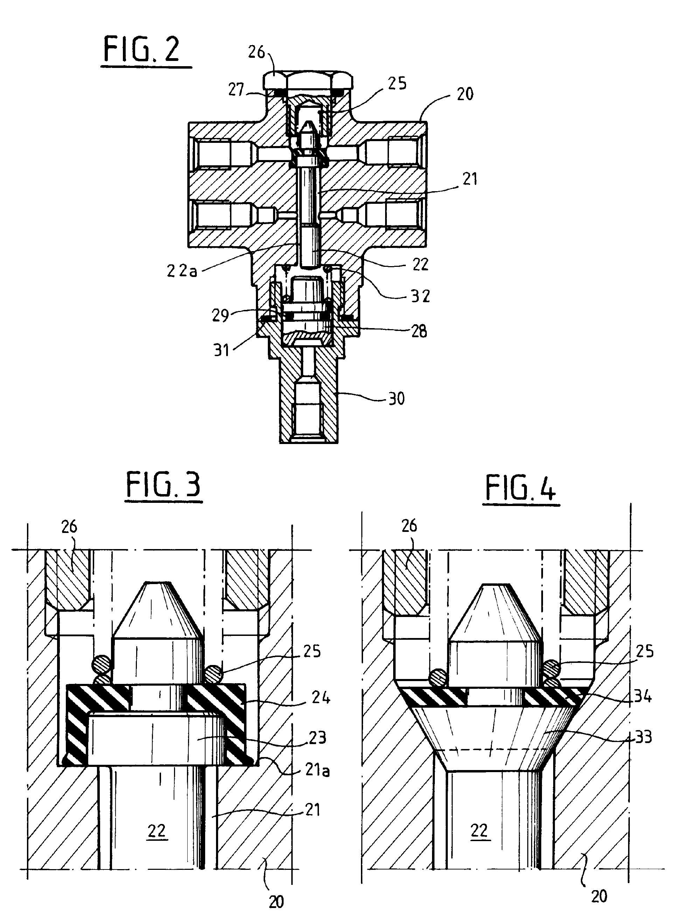

Ainsi qu'on le voit à la Figure 2, chacun des clapets anti-affaissement 15a et 15b est constitué par un corps 20 muni d'un perçage 21 de section S1; dans ce perçage coulisse avec jeu un poussoir 22 comportant un épaulement 23, le jeu étant ici réalisé par un méplat 22a. Sur cet épaulement est monté un joint en élastomère 24 qui est poussé par un ressort 25 contre le débouché 21a du perçage 21 qui forme siège de clapet; ce ressort est lui-même centré dans un bouchon 26 muni d'un joint d'étanchéité 27. Dans la partie du corps opposée au bouchon 26, un piston 28 équipé d'un joint composite 29 est monté coulissant dans l'alésage, de section S2 supérieure à S1, d'un cylindre 30 muni d'un joint d'étanchéité 31 et est plaqué au fond du cylindre par un ressort 32. Le cylindre 30 de chacun des clapets anti-affaissement est relié au clapet de sécurité 5. La partie du perçage 21 situé en aval de l'épaulement est reliée aux cylindres de suspension 16 ou 18. La partie de ce perçage situé en amont est reliée uniquement au correcteur de hauteur 14a pour le clapet avant 15a et à la fois au correcteur de hauteur 14b et à l'accumulateur auxiliaire 10 pour le clapet arrière 15b.

Le fonctionnement de la suspension est le suivant, en supposant tout d'abord le véhicule à l'arrêt et le levier manuel de commande de hauteur en position "route". Le moteur étant coupé, la pompe haute pression 1 ne délivre plus de pression mais la pression dans l'accumulateur principal 4 est suffisante pour maintenir ouverte la vanne de sécurité 5. La Pression dans le circuit général et dans le circuit de suspension va chuter progressivement par les micro-fuites des organes à tiroirs tels que correcteurs de hauteur, conjoncteur-disjoncteur, doseurs de freins, vanne de sécurité, etc. Le véhicule va donc s'affaisser mettant les correcteurs de hauteur 14a et 14b en position d'admission, tant que la pression dans l'accumulateur principal 4 est supérieure à celle régnant dans les cylindres de suspension 16 et 18, la correction est possible. Lorsque la pression dans l'accumulateur principal 4 devient égale à celle de la suspension, le ressort 32 repousse le piston 28, et le clapet se ferme sous l'action du ressort 25, les cylindres de suspension 16 et 18 étant alors isolés des sources de fuites. Le véhicule ne s'affaisse plus, la pression dans les cylindres de suspension étant celle correspondant à l'état de charge du véhicule, soit à vide, soit coffre chargé.

Si le véhicule est arrêté, alors que le levier manuel de commande de hauteur a été mis en position "haute" par le conducteur désirant franchir un obstacle, les pressions dans les différentes chambres étant égales, le clapet 23-24 se ferme et le véhicule reste en position "haute"; la pression dans les cylindres de suspension 16 et 18 est la pression maximale de l'accumulateur principal 4. La pression dans les autres circuits peut chuter à zéro si l'arrêt est suffisamment prolongé. A la remise en route, la pression maximale de l'accumulateur vient s'établir de part et d'autre du piston 28, donc le clapet ne s'ouvre pas, le véhicule reste en position haute. Pour revenir à la position "route" (ou une autre) il faut replacer le levier de commande dans son cran "route". La voiture étant en position "haute" et le levier en position "route", le tiroir du correcteur de hauteur 14a ou 14b se place alors en échappement jusqu'à ce que la position moyenne soit atteinte par le véhicule. Ceci a pour effet de faire chuter la pression au-dessus du piston 28, qui peut alors remonter jusqu'au contact du poussoir 22, et comme la section S2 du piston 28 est supérieure à la section S1 du perçage 21, le clapet 23-24 s'ouvre.

Les freins avant sont alimentés en permanence par l'accumulateur principal 4, et les freins arrière par les accumulateurs de suspension arrière 19. La fonction de la vanne de sécurité 5 est de séparer l'accumulateur principal 4 des accumulateurs de suspension arrière 19 pour un seuil de pression déterminé par son ressort 13, de telle sorte que, lors d'un incident occasionnant une fuite importante, soit à l'avant soit à l'arrière, il y ait toujours du frein du côté opposé à l'incident. Dans le cas où un clapet anti-affaissement est monté sur chaque essieu d'un véhicule, et qu'une fuite importante se produise à l'avant, la vanne 5 se ferme mais aussi les deux clapets anti-affaissement 15a et 15b puisqu'ils sont pilotés par la pression de l'accumulateur principal 4. Il n'y aurait donc plus de freins ni à l'avant ni à l'arrière. Mais l'accumulateur 10 assure la pression sur les freins arrière quand il y a un incident à l'avant.

Dans la variante de la Figure 4, l'épaulement 23 et son joint 24 sont remplacés par une portion tronconique 33 sur laquelle est montée une rondelle en caoutchouc 34.

## Revendications

1. Suspension hydropneumatique de véhicule automobile comportant un accumulateur principal (4) alimenté par une pression régulée par une pompe à haute pression (1), un vérin de suspension (16 ou 18) coopérant avec un accumulateur hydropneumatique (17 ou 19) pour chacune des roues du véhicule, un correcteur de hauteur (14a ou 14b) pour chacun des essieux et propre à relier selon la charge de l'essieu les vérins de suspension correspondants soit à l'accumulateur principal, soit à l'échappement, chaque essieu étant muni d'un clapet anti-affaissement (15a ou 15b) interposé entre les vérins de suspension de cet essieu et le correcteur de hauteur correspondant, ainsi que des moyens sensibles à la pression de l'accumulateur principal (4) et coopérant avec un ressort antagoniste (25) pour ouvrir et fermer ce clapet, le clapet anti-affaissement (15a ou 15b) comportant d'une part un poussoir (22) soumis à l'action du ressort (25) et coulissant dans un perçage (21) et propre à emprisonner le liquide dans les vérins et les accumulateurs de suspension et d'autre part un piston (28) de section plus grande qui peut repousser le poussoir et sur lequel agit la pression de l'accumulateur principal (4) caractérisée en ce que la suspension comporte en outre une commande manuelle de hauteur comportant une position haute, en ce que le piston (28) et le poussoir (22) sont désolidarisés, des moyens (21,22a) reliant hydrauliquement au correcteur de hauteur (14a,14b) la partie située entre le poussoir (22) et le piston (28), et en ce que la pression de l'accumulateur principal (4) agit sur le piston (28) à l'encontre d'un deuxième ressort (32).

2. Suspension selon la revendication 1,
caractérisée en ce que le poussoir (22) comporte un épaulement (23) sur lequel est monté un joint (24) en élastomère et est monté coulissant dans un perçage épaulé (21) du corps (20) du clapet.

3. Suspension selon la revendication 1,
caractérisée en ce que le poussoir comporte une portion tronconique (33) coopérant avec une portion tronconique d'un perçage du corps (20) du clapet.

4. Suspension selon l'une quelconque des revendications précédentes,
caractérisée en ce que le poussoir (22) est monté avec jeu de sorte que la pression délivrée par le correcteur de hauteur agit sur le piston (28) à l'encontre de la pression délivrée par l'accumulateur principal.

5. Suspension selon la revendication 4,
caractérisée en ce que le jeu est formé par un méplat (22a).

## Patentansprüche

1. Hydropneumatische Aufhängung eines Kraftfahrzeugs mit einem Hauptakkumulator (4), der mit einem geregelten Druck durch eine Hochdruckpumpe (1) versorgt wird, einem mit einem hydropneumatischen Akkumulator (17 oder 19) zusammenwirkenden Aufhängungszylinder (16 oder 18) für jedes Rad des Fahrzeugs, einer Höhenkorrekturvorrichtung (14a oder 14b) für jede Achse, die eingerichtet ist, um je nach Achslast die entsprechenden Aufhängungskolben entweder mit dem Hauptakkumulator oder mit dem Auslaß zu verbinden, wobei jede Achse mit einem Antiabsinkventil 15a oder 15b, das zwischen den Aufhängungskolben dieser Achse und der entsprechenden Höhenkorrekturvorrichtung angeordnet ist, sowie mit gegen den Druck des Hauptakkumulators (4) empfindlichen und mit einer Gegenfeder (25) zusammenwirkenden Einrichtungen, zum Öffnen und Schließen dieses Ventils versehen ist, wobei das Antiabsinkventil (15a oder 15b) einerseits einen der Wirkung der Feder (25) unterliegenden, in einer Bohrung (21) beweglichen Schieber (22), der eingerichtet ist, um die Flüssigkeit in den Kolben und den Druckakkumulatoren einzuschließen, und andererseits einen Kolben (28) mit größerem Querschnitt umfaßt, der den Schieber zurückschieben kann, und auf den der Druck des Hauptakkumulators (4) wirkt,
dadurch **gekennzeichnet**, daß
die Aufhängung eine manuelle Höhensteuerung mit einer hohen Position umfaßt, daß der Kolben (28) und der Schieber (22) voneinander getrennt sind, wobei Einrichtungen (21, 22a) den zwischen dem Schieber (22) und dem Kolben (28) liegenden Bereich hydraulisch mit der Höhenkorrekturvorrichtung (14a, 14b) verbinden, und daß der Druck des Hauptakkumulators (4) auf den Kolben (28) entgegen einer zweiten Feder (32) wirkt.

2. Aufhängung nach Anspruch 1,
dadurch gekennzeichnet, daß
der Schieber einen kegelförmigen Abschnitt (33) aufweist, der mit einem kegelförmigen Abschnitt einer Bohrung des Körpers (20) des Ventils zusammenwirkt.

3. Aufhängung nach Anspruch 1 oder 2,
dadurch gekennzeichnet, daß
der Schieber (22) mit Spiel montiert ist, so daß der von der Höhenkorrekturvorrichtung abgegebene Druck auf den Kolben (28) entgegen dem vom Hauptakkumulator abgegebenen Druck wirkt.

4. Aufhängung nach Anspruch 3,
dadurch gekennzeichnet, daß
das Spiel durch eine Anflachung (22a) gebildet ist.

## Claims

1. A hydro-pneumatic suspension for a motor vehicle comprising a main accumulator (4) supplied by pressure regulated by a high-pressure pump (1), a suspension jack (16 or 18) cooperating with a hydro-pneumatic accumulator (17 or 19) for each of the vehicle wheels, a height corrector (14a or 14b) for each of the axles and suitable, according to the load on the axle, for connecting the corresponding suspension jacks either to the main accumulator or to the exhaust, each axle being provided with an anti-subsidence valve (15a or 15b) interposed between the suspension jacks of that axle and the corresponding height corrector, as well as pressure-sensitive means for the main accumulator (4) and cooperating with a counter-spring (25) to open and shut this valve, the anti-subsidence valve (15a or 15b) comprising on the one hand a push-rod (22) subjected to the action of the spring (25) and sliding inside a perforation (21), and suitable for capturing the liquid in the jacks and the suspension accumulators and, on the other hand, a piston (28) with a larger section which can drive back the push-rod and which is acted on by the pressure of the main accumulator (4), characterised in that the suspension further comprises a manual height control comprising a high position, in that the piston (28) and the push-rod (22) are not integral, means (21, 22a) hydraulically connecting to the height corrector (14a, 14b) the portion situated between the push-rod (22) and the piston (28), and in that the pressure of the main accumulator (4) acts on the piston (28) counter to a second spring (32).

2. A suspension according to Claim 1, characterised in that the push-rod (22) comprises a shoulder (23) on which there is mounted a seal (24) made of elastomer and is mounted so as to slide inside a perforation (21) with a shoulder, in the body (20) of the valve.

3. A suspension according to Claim 1, characterised in that the push-rod comprises a portion shaped like a truncated cone (33) cooperating with a portion shaped like a truncated cone of a perforation of the body (20) of the valve.

4. A suspension according to any one of the preceding claims, characterised in that the push-rod (22) is mounted with play such that the pressure delivered by the height corrector acts on the piston (28) counter to the pressure delivered by the main accumulator.

5. A suspension according to Claim 4, characterised in that the play is formed by a flat surface (22a).
